# EUROPEAN PATENT APPLICATION

(11) **EP 3 264 263 A1**
(43) Date of publication of application: **03.01.2018**
(21) Application number: 17170203.8
(22) Date of filing: 09.05.2017
(51) Int. Cl.: G06F 9/38, G06F 11/34

(54) **SEQUENTIAL MONITORING AND MANAGEMENT OF CODE SEGMENTS FOR RUN-TIME PARALLELIZATION**

(30) Priority: 29.06.2016 US 201615196071
(71) Applicant: Centipede Semi Ltd., 4250438 Netanya (IL)
(72) Inventor: KOREN, Shay, Tel-Aviv (IL); PORAT, Arie Hacohen Ben, Tel-Aviv (IL); GOREN, Ido, Herzliya (IL); MIZRAHI, Noam, Hod Hasharon (IL); FRIEDMANN, Jonathan, 5068 Even Yehuda (IL)
(74) Representative: Beck Greener

(57) **Abstract**

A processor includes an instruction pipeline and control circuitry. The instruction pipeline is configured to process instructions of program code. The control circuitry is configured to monitor the processed instructions at run-time, to construct an invocation data structure comprising multiple entries, wherein each entry (i) specifies an initial instruction that is a target of a branch instruction, (ii) specifies a portion of the program code that follows one or more possible flow-control traces beginning from the initial instruction, and (iii) specifies, for each possible flow-control trace specified in the entry, a next entry that is to be processed following processing of that possible flow-control trace, and to configure the instruction pipeline to process segments of the program code, by continually traversing the entries of the invocation data structure.

## Description

### FIELD OF THE INVENTION

The present invention relates generally to processor design, and particularly to methods and systems for run-time code parallelization.

### BACKGROUND OF THE INVENTION

Various techniques have been proposed for dynamically parallelizing software code at run-time. For example, Marcuellu et al., describe a processor microarchitecture that simultaneously executes multiple threads of control obtained from a single program by means of control speculation techniques that do not require compiler or user support, in "Speculative Multithreaded Processors," Proceedings of the 12th International Conference on Supercomputing, 1998, which is incorporated herein by reference.

Codrescu and Wills describe a dynamic speculative multithreaded processor that automatically extracts thread-level parallelism from sequential binary applications without software support, in "On Dynamic Speculative Thread Partitioning and the MEM-slicing Algorithm," Journal of Universal Computer Science, volume 6, issue 10, October 2000, pages 908-927, which is incorporated herein by reference.

### SUMMARY OF THE INVENTION

An embodiment of the present invention that is described herein provides a processor including an instruction pipeline and control circuitry. The instruction pipeline is configured to process instructions of program code. The control circuitry is configured to monitor the processed instructions at run-time, to construct an invocation data structure including multiple entries, wherein each entry (i) specifies an initial instruction that is a target of a branch instruction, (ii) specifies a portion of the program code that follows one or more possible flow-control traces beginning from the initial instruction, and (iii) specifies, for each possible flow-control trace specified in the entry, a next entry that is to be processed following processing of that possible flow-control trace, and to configure the instruction pipeline to process segments of the program code, by continually traversing the entries of the invocation data structure.

In some embodiments, the control circuitry is configured to monitor the instructions continuously for all the instructions flowing through the pipeline, such that the invocation data structure progressively grows towards covering the entire program code. In an embodiment, the control circuitry is configured to trigger monitoring of subsequent instructions in response to (i) every termination of a current monitoring process, (ii) every traversal of an entry that does not yet specify the next entry, and (iii) every traversal of an whose specified next entry does not exist in the invocation data structure.

In another embodiment, in response to terminating monitoring of a flow-control trace, the control circuitry is configured to either (i) trigger traversal of a given entry of the invocation database corresponding to the instructions that are subsequent to the terminated flow-control trace, or (ii) trigger monitoring of the instructions that are subsequent to the terminated flow-control trace.

In yet another embodiment, the control circuitry is configured to define each of the possible flow-control traces to end in a respective branch instruction. In a disclosed embodiment, the control circuitry is configured to construct the invocation data structure by: while the processor processes the instructions on a given flow-control trace specified in a given entry, identifying that no next entry is specified for the given flow-control trace; and monitoring a new portion of the program code that the processor processes subsequently to the given flow-control trace, and adding the new portion to the invocation database.

In some embodiments, the control circuitry is configured to decide to terminate monitoring of a new flow-control trace in response to meeting a predefined termination criterion, and then to add the new flow-control trace to the invocation database. The control circuitry may be configured to meet the termination criterion in response to one or more of: reaching an indirect branch instruction; reaching a call to a function; reaching an indirect call to a function; reaching a return from a function; reaching a backward branch instruction; reaching a predefined number of backward branch instructions; encountering branch mis-prediction; reaching an instruction that already belongs to an existing entry in the invocation database; detecting that the new portion exceeds a predefined number of loop iterations; and detecting that the new portion exceeds a predefined size.

In an embodiment, the termination criterion is partly random. In another embodiment, the control circuitry is configured to detect that the new flow-control trace contains, or is contained within, an existing flow-control trace that is already specified in the invocation database, and to retain only one of the existing flow-control trace and the new flow-control trace. In an embodiment, each possible flow-control trace in the invocation data structure includes one of: a first type, which ends by returning to the initial instruction or to an instruction subsequent to a function call that branched to the initial instruction; and a second type, which ends by branching out of the portion of the program code.

In some embodiments, the control circuitry is configured to configure the instruction pipeline to process the segments by invoking two or more of the segments at least partially in parallel. In some embodiments, the control circuitry is configured to include in a given flow-control trace multiple iterations of a loop.

There is additionally provided, in accordance with an embodiment of the present invention, a method including, in a processor that includes a pipeline that processes instructions of program code, monitoring the processed instructions at run-time, and constructing an invocation data structure including multiple entries. Each entry (i) specifies an initial instruction that is a target of a branch instruction, (ii) specifies a portion of the program code that follows one or more possible flow-control traces beginning from the initial instruction, and (iii) specifies, for each possible flow-control trace specified in the entry, a next entry that is to be processed following processing of that possible flow-control trace. The pipeline is configured to process segments of the program code, by continually traversing the entries of the invocation data structure.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a processor, in accordance with an embodiment of the present invention;
Fig. 2 is a diagram that schematically illustrates an invocation database, in accordance with an embodiment of the present invention;
Fig. 3 is a flow chart that schematically illustrates a method for constructing an invocation database and managing code segments, in accordance with an embodiment of the present invention; and
Fig. 4 is a diagram that schematically illustrates example entries in an invocation database, in accordance with embodiments of the present invention.

### DETAILED DESCRIPTION OF EMBODIMENTS

### OVERVIEW

Embodiments of the present invention that are described herein provide improved methods and apparatus for processing program code in processors. In some embodiments, a processor comprises a pipeline that executes program code instructions, and control circuitry that, among other tasks, instructs the pipeline which instructions are to be processed.

The program code comprises conditional branch instructions. Therefore, the actual processing in a certain region of the code may traverse various possible flow-control traces, depending on the actual branch decisions taken at run-time. An actual sequence of instructions that is processed by the pipeline is referred to herein as a segment. In other words, a segment can be viewed as an instantiation of a particular flow-control trace, and corresponds to a specific series of branch decisions.

In some embodiments, the control circuitry monitors the instructions that flow through the pipeline at run-time, and constructs a data structure that is referred to as an invocation database. The invocation database is updated continuously by the control circuitry, and at the same time is used for choosing and invoking the next segments to be processed by the pipeline.

The invocation database comprises multiple entries. A given entry typically specifies the following:
▪ An initial instruction, also referred to as an Invocation Instruction Identifier (IID). The initial instruction is typically constrained to be a target of a branch instruction (taken or not taken).
▪ One or more possible flow-control traces through a portion of the code. All the possible flow-control traces in a given entry begin from the initial instruction of that entry. Each trace ends in a branch instruction (taken or not taken). A return from a function is also regarded as a branch instruction in this context.
▪ For each specified flow-control trace, the next entry of the invocation database that is to be processed following processing of that flow-control trace. At any point in time, however, some flow-control traces may have the next entry set to "UNSPECIFIED".

The control circuitry typically instructs the pipeline as to which code segments to process, by traversing the invocation database. When traversing an entry having multiple possible flow-control traces, the control circuitry chooses the flow-control trace to be followed using trace prediction. When reaching the end of the currently-followed flow-control trace, or when one of the fetch units in the pipeline becomes idle, the control circuitry jumps to the next entry specified for that trace. Aspects of using invocation databases of this sort are also addressed in U.S. Patent Application 15/079,181, filed March 24, 2016, which is assigned to the assignee of the present patent application and whose disclosure is incorporated herein by reference.

In a typical embodiment, the invocation database is initially empty. Over time, the control circuitry continues to add new entries and/or add flow-control traces to existing entries, as appropriate. The invocation database is typically updated during the regular operation of the processor. When the processor completes fetching a segment having a flow-control trace for which no next entry is specified, or when encountering a trigger in the code (e.g. backwards branch), the control circuitry starts monitoring the subsequent code being processed, and at some stage decides to terminate the monitored flow-control trace and add it to the database. In some embodiments, the termination is performed a branch instruction (either taken or not taken).

Example termination criteria, for deciding when to terminate a monitored flow-control trace and add it to the database, are described herein. In some embodiments, upon identifying that a currently-monitored flow-control trace contains an existing flow-control trace, or is contained within an existing flow-control trace, the control circuitry retains only one of these traces and discards the other. Merging criteria, for deciding which trace to retain, are also described.

In some embodiments the pipeline of the processor is capable of processing multiple segments at least partly in parallel. In these embodiments, the control circuitry may monitor multiple traces at least partly in parallel, and/or instruct the pipeline to process multiple segments at least partly in parallel.

When applying the disclosed updating process, and termination and merging criteria, the resulting invocation database becomes highly efficient. Since the database is configured to store multiple flow-control traces having large commonality in a single entry, it is highly efficient in terms of memory space. The commonality between different traces, as it is represented in the invocation database, also assists the processor in making reliable trace predictions.

Unlike possible naïve solutions that focus on specific code regions such as loops and functions, the monitoring and database construction process described herein aims to have the invocation database cover the entire code continuously. Continuity means that, at any given time, the control circuitry either traverses a flow-control trace that is already available in the invocation database, or monitors the instructions in order to have the database cover them. Monitoring is triggered immediately as soon as there is no existing flow-control trace to follow in the database, e.g., in response to branch or trace mis-prediction.

### SYSTEM DESCRIPTION

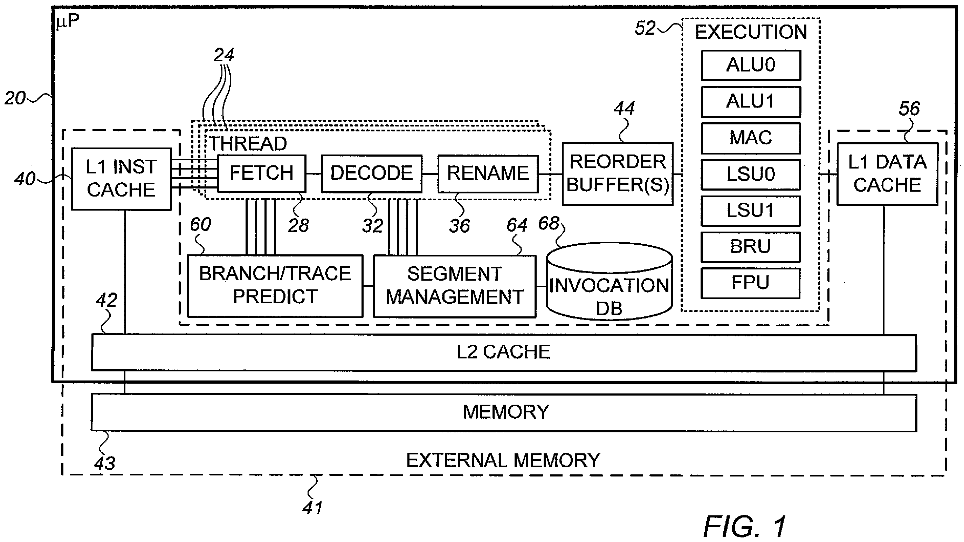

Fig. 1 is a block diagram that schematically illustrates a processor 20, in accordance with an embodiment of the present invention. In the present example, processor 20 comprises multiple hardware threads 24 that are configured to operate in parallel. Each thread 24 is configured to process one or more respective segments of the code. Certain aspects of thread parallelization are addressed, for example, in U.S. Patent Applications 14/578,516, 14/578,518, 14/583,119, 14/637,418, 14/673,884, 14/673,889 and 14/690,424, 14/794,835, 14/924,833 and 14/960,385, which are all assigned to the assignee of the present patent application and whose disclosures are incorporated herein by reference.

Although the present example refers to a multi-thread processor, the disclosed techniques are similarly applicable to single-thread processors, as well. Although the embodiments described herein refer mainly to an out-of-order processor, the disclosed techniques can be used in in-order processors, as well.

In the present embodiment, each thread 24 comprises a fetching module 28, a decoding module 32 and a renaming module 36. Fetching modules 24 fetch the program instructions of their respective code segments from a memory, e.g., from a multi-level instruction cache. In the present example, processor 20 comprises a memory system 41 for storing instructions and data. Memory system 41 comprises a multi-level instruction cache comprising a Level-1 (L1) instruction cache 40 and a Level-2 (L2) cache 42 that cache instructions stored in a memory 43. Decoding modules 32 decode the fetched instructions.

Renaming modules 36 carry out register renaming. The decoded instructions provided by decoding modules 32 are typically specified in terms of architectural registers of the processor's instruction set architecture. Processor 20 comprises a register file that comprises multiple physical registers. The renaming modules associate each architectural register in the decoded instructions to a respective physical register in the register file (typically allocates new physical registers for destination registers, and maps operands to existing physical registers).

The renamed instructions (e.g., the micro-ops/instructions output by renaming modules 36) are buffered in-order in one or more Reorder Buffers (ROB) 44, also referred to as Out-of-Order (OOO) buffers. In alternative embodiments, one or more instruction queue buffers are used instead of ROB. The buffered instructions are pending for out-of-order execution by multiple execution modules 52, i.e., not in the order in which they have been fetched. In alternative embodiments, the disclosed techniques can also be implemented in a processor that executes the instructions in-order.

The renamed instructions buffered in ROB 44 are scheduled for execution by the various execution units 52. Instruction parallelization is typically achieved by issuing one or multiple (possibly out of order) renamed instructions/micro-ops to the various execution units at the same time. In the present example, execution units 52 comprise two Arithmetic Logic Units (ALU) denoted ALU0 and ALU1, a Multiply-Accumulate (MAC) unit, two Load-Store Units (LSU) denoted LSU0 and LSU1, a Branch execution Unit (BRU) and a Floating-Point Unit (FPU). In alternative embodiments, execution units 52 may comprise any other suitable types of execution units, and/or any other suitable number of execution units of each type. The cascaded structure of threads 24 (including fetch modules 28, decoding modules 32 and renaming modules 36), ROB 44 and execution units 52 is referred to herein as the pipeline of processor 20.

The results produced by execution units 52 are saved in the register file, and/or stored in memory system 41. In some embodiments the memory system comprises a multi-level data cache that mediates between execution units 52 and memory 43. In the present example, the multi-level data cache comprises a Level-1 (L1) data cache 56 and L2 cache 42.

In some embodiments, the Load-Store Units (LSU) of processor 20 store data in memory system 41 when executing store instructions, and retrieve data from memory system 41 when executing load instructions. The data storage and/or retrieval operations may use the data cache (e.g., L1 cache 56 and L2 cache 42) for reducing memory access latency. In some embodiments, high-level cache (e.g., L2 cache) may be implemented, for example, as separate memory areas in the same physical memory, or simply share the same memory without fixed pre-allocation.

A branch/trace prediction module 60 predicts branches or flow-control traces (multiple branches in a single prediction), referred to herein as "traces" for brevity, that are expected to be traversed by the program code during execution by the various threads 24. Based on the predictions, branch/trace prediction module 60 instructs fetching modules 28 which new instructions are to be fetched from memory. Branch/trace prediction in this context may predict entire traces for segments or for portions of segments, or predict the outcome of individual branch instructions.

In some embodiments, processor 20 comprises a segment management module 64. Module 64 monitors the instructions that are being processed by the pipeline of processor 20, and constructs an invocation data structure, also referred to as an invocation database 68. Invocation database 68 divides the program code into portions, and specifies the flow-control traces for these portions and the relationships between them. Module 64 uses invocation database 68 for choosing segments of instructions to be processed, and instructing the pipeline to process them. Database 68 is typically stored in a suitable internal memory of the processor. The structure of database 68, and the way it is constructed and used by module 64, are described in detail below.

The configuration of processor 20 shown in Fig. 1 is an example configuration that is chosen purely for the sake of conceptual clarity. In alternative embodiments, any other suitable processor configuration can be used. For example, parallelization can be performed in any other suitable manner, or may be omitted altogether. The processor may be implemented without cache or with a different cache structure. The processor may comprise additional elements not shown in the figure. Further alternatively, the disclosed techniques can be carried out with processors having any other suitable micro-architecture. As another example, it is not mandatory that the processor perform register renaming.

In various embodiments, the techniques described herein may be carried out by module 64 using database 68, or it may be distributed between module 64, module 60 and/or other elements of the processor. In the context of the present patent application and in the claims, any and all processor elements that construct the invocation database and use the database for controlling the pipeline is referred to collectively as "control circuitry."

Processor 20 can be implemented using any suitable hardware, such as using one or more Application-Specific Integrated Circuits (ASICs), Field-Programmable Gate Arrays (FPGAs) or other device types. Additionally or alternatively, certain elements of processor 20 can be implemented using software, or using a combination of hardware and software elements. The instruction and data cache memories can be implemented using any suitable type of memory, such as Random Access Memory (RAM).

Processor 20 may be programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

### RUN-TIME CONSTRUCTION OF INVOCATION DATABASE AND MANAGEMENT OF CODE SEGMENTS

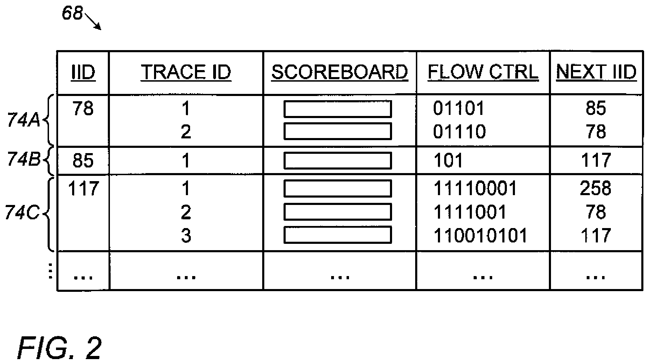

Fig. 2 is a diagram that schematically illustrates an example of invocation database 68, in accordance with an embodiment of the present invention. In the description that follows, invocation database 68 is referred to simply as "database" and flow-control traces are referred to simply as "traces" for brevity.

Database 68 comprises multiple entries. The example of Fig. 2 shows three entries denoted 74A-74C. A given entry specifies an initial instruction and one or more possible flow-control traces through a portion of the code that begin from this initial instruction. The initial instruction is identified by a respective Invocation Instruction Identifier (IID), which may comprise, for example, the Program Counter (PC) value that defines the location of the instruction in the program code. Alternatively, the IID may be represented by any other suitable index, as long as all the flow-control traces having the same initial instruction are grouped under the same index.

When creating and updating database 68, the IID is chosen to be a target of a branch instruction, and each trace is set to end with a branch instruction (taken or not taken). Within a given entry (e.g., entries 74A-74C), each trace is identified by a respective trace identifier (TRACE ID). Each entry also specifies the flow-control path traversed by each trace through the code. In an embodiment, each trace is specified by the corresponding sequence of branch decisions ("branch taken" or "branch not taken"). A sequence of branch decisions can be represented, for example, in a compact manner by a binary string in which "1" represents a "taken" branch decision and a "0" represents a "not taken" branch decision.

Consider, for example, the first entry 74A shown in Fig. 2. This entry specifies two traces that belong to IID=78. The code region in question comprises five conditional branch instructions. The flow control of the first trace is "not taken", "taken", "taken", "not taken", "taken", i.e., "01101". The flow control of the second trace is "not taken", "taken", "taken", "taken", "not taken", i.e., "01110". Alternatively, any other suitable representation can be used to specify the traces.

In addition, for each flow-control trace, the entry specifies the next entry (or, equivalently, the next IID) to be processed. The NEXT IID indications set the order in which the code is processed by the pipeline. At run-time, when the pipeline completes (or is about to complete) processing a certain trace, the control circuitry instructs the pipeline to subsequently process the specified NEXT IID.

In some embodiments, the various traces in database 68 are classified into two types, referred to herein as "normal" traces and "exit" traces. A normal trace is a trace that ends by returning to the initial instruction or to a function that called the initial instruction. An exit trace is a trace that ends by branching out of the code region in question.

When starting to process a given entry (a given IID) that comprises multiple traces, the control circuitry typically chooses between them based on trace-prediction results provided by branch/trace prediction module 60. For a normal trace (according to the definition above), the next invocation is from the same entry, i.e., same IID. For an exit trace (according to the definition above), the next invocation is from a different entry, i.e., different IID (the specified NEXT IID).

In the example of Fig. 2, each and every possible trace has a specified NEXT IID. Since, however, database 68 is constructed and updated at run-time, some traces may not have a specified NEXT IID at a certain point in time. In the present context, an "UNSPECIFIED" indication is also regarded as a NEXT ID indication.

In some embodiments, a flow-control trace in database 68 may end with an indirect branch instruction. In such a case, the same indirect branch may have multiple different target addresses, meaning that there may be multiple different NEXT IIDs for this trace, depending on the outcome of the indirect branch. The control circuitry may represent this situation in database 68 in various ways. In one example, the database comprises suitable fields for specifying multiple NEXT IIDs per trace, and the condition leading to each one. Alternatively, the database may indicate that the NEXT IID is to be specified by a different predictor, and the control circuitry can then use this predictor to determine the NEXT IID at runtime. Further alternatively, any other suitable technique can be used for accounting for multiple NEXT IIDs caused by an indirect branch at the end of a trace.

In some embodiments, database 68 also specifies a "scoreboard" for each trace. The scoreboard of a given trace is a data structure that specifies the way registers of processor 20 are accessed by the instructions of that trace. The scoreboard may indicate, for example, the location in the code of the last write instructions to a certain register (or equivalently, the number of writes to the register). The scoreboard may also specify a classification of the registers as Global, Local or Global-Local. The scoreboard is used, for example, for efficiently parallelizing the processing of code segments. Further details regarding the structure and use of scoreboard are addressed in U.S. Patent Applications 14/578,516, 14/578,518, 14/583,119, 14/637,418, 14/673,884, 14/673,889 and 14/690,424, 14/794,835, 14/924,833 and 14/960,385, cited above.

Additionally or alternatively, database 68 may comprise any other suitable type of entries or fields, and may specify any other suitable parameters.

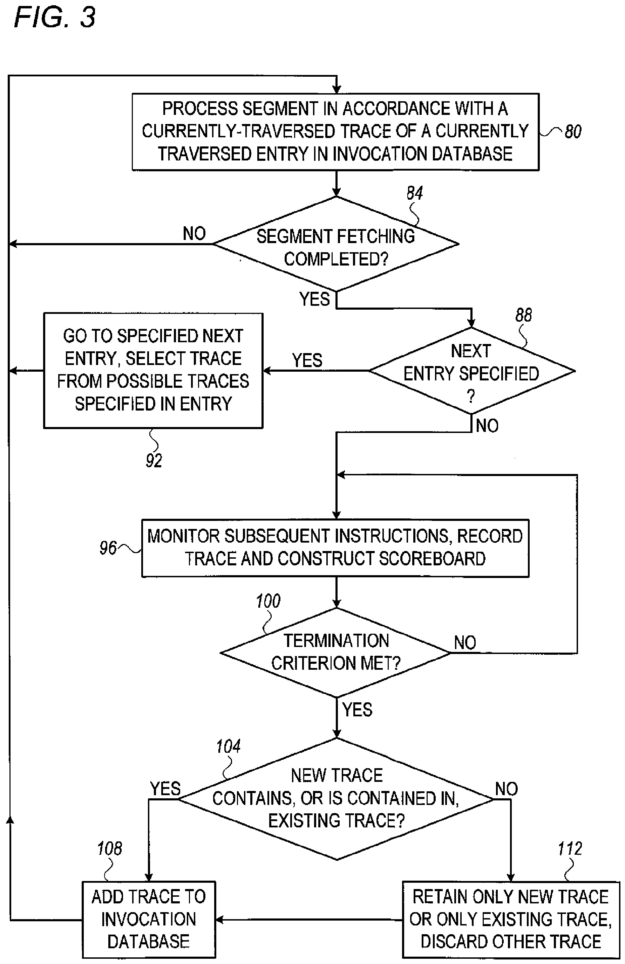

Fig. 3 is a flow chart that schematically illustrates a method for constructing database 68, and managing code segments using database 68, in accordance with an embodiment of the present invention. For the sake of clarity, Fig. 3 focuses on the steady-state flow and excludes scenarios in which no traces are available, such as the initial creation of database 68 and mis-prediction. These scenarios are addressed further below.

The method begins with segment management module 64 instructing the pipeline of processor 20 to process a certain segment of the program code, at a segment processing step 80. The segment follows one of the possible traces that are specified in the currently-traversed entry of database 68.

At a completion checking step 84, module 64 checks whether the pipeline has completed (or is about to complete) fetching of the current segment. If so, at a next entry checking step 88, module 64 checks whether the currently-traversed entry in database 68 specifies a NEXT IID for the current trace.

If the NEXT IID is specified, module 64 accesses the specified next entry, and selects one of the possible traces specified in that entry, at a next trace selection step 92. The method then loops back to step 80 above, in which module 64 instructs the pipeline to process a code segment that follows the selected next trace.

In some cases, module 64 may discover at step 88 that the currently-traversed entry in database 68 does not specify the NEXT IID for the current trace, or that the NEXT IID is specified but no entry exists in the database for this NEXT IID. In such a case, the subsequent code was not monitored before, and database 68 does not cover it.

In such a case, module 64 begins a monitoring process that creates a new trace and possibly a new IID. At a monitoring step 96, module 64 monitors the subsequent instructions being processed by the pipeline. As part of the monitoring process, module 64 records the trace that is traversed by the monitored instructions (e.g., records the branch decisions), and constructs a scoreboard associated with the trace. This new trace and the associated scoreboard will later be added to database 68.

At a termination checking step 100, module 64 decides whether to continue or terminate the monitoring process. Various suitable termination criteria can be used for this purpose. For example, module 64 may decide to terminate the monitoring process in response to encountering a particular type of branch instruction (e.g., an indirect branch instruction, a call to a function, a return from a function, or a backward branch instruction, or after a certain number of branches.

As another example, module 64 may decide to terminate the monitoring process in response to detecting branch mis-prediction. As yet another example, module 64 may decide to terminate the monitoring process in response to reaching an instruction that already belongs to an existing entry in the database 68, i.e., upon encountering a previously-monitored IID. In particular, module 64 may terminate the monitoring process upon encountering an existing IID, i.e., when reaching the initial instruction of an existing entry in database 68. Note that this sort of termination may create a trace that does not end in a branch.

As yet another example, module 64 may decide to terminate the monitoring process when the new trace exceeds a certain number of loop iterations. The number of loop iterations may be fixed, or it may depend, for example, on the number of branches in the loop or on the number of instructions in the loop.

As another example, module 64 may decide to terminate the monitoring process when the length of the trace becomes too large. For example, module 64 may terminate the monitoring process when the trace exceeds a certain number of monitored instructions or micro-ops, when the trace exceeds a certain number of branch instructions, when the trace exceeds a certain number of registers that are written to, when the trace exceeds a certain number of writes to the same register. In such cases, module 64 may terminate the monitoring in the next encountered branch instruction, or in the previous encountered branch instruction.

In some embodiments, module 64 may introduce some degree of randomness into the termination criterion. For example, module 64 may decide to terminate the monitoring process when the trace exceeds a certain number of branch instruction, and a random number distributed between 0 and 1 is smaller than a predefined value p (0<p<1). As another example, module 64 may decide to terminate the monitoring process when encountering a backward branch, and a random number distributed between 0 and 1 is smaller than a predefined value p (0<p<1). in this manner, some randomness can be added to any of the termination criteria described above.

Further alternatively, the control circuitry may evaluate any other suitable termination criterion.

If the termination criterion is not met, the method loops back to step 96 above, in which module 64 continues to monitor the instructions, record the trace and construct the scoreboard.

When the termination criterion is met, module 64 checks whether the newly-recorded trace contains, or is contained within, a trace that already exists in database 68, at a containment checking step 104. If not, and provided that an identical trace does not already exist in the database, module 64 adds the new trace to database 68, at a trace addition step 108. The method then loops back to step 80 above.

If the newly-recorded trace contains, or is contained within, an existing trace, module 64 chooses to retain only one of the traces (the new trace or the existing trace) and discards the other trace, at a discarding step 112. The method then moves to step 108, in which the trace chosen to be retained is added to database 68.

Module 64 may use various suitable criteria, referred to herein as merging criteria, for deciding which of the two traces to retain (the contained trace or the containing trace). In one example embodiment, if one trace is a normal trace and the other trace is an exit trace (in accordance with the definitions above), module 64 retains the normal trace and discards the exit trace. In other words, if the existing trace is a normal trace and the new trace is an exit trace contained within the normal trace, then the new trace is discarded. If the new trace is a normal trace and the existing trace is an exit trace contained within the normal trace, then the existing trace is discarded and the new trace is added to replace it in the database.

In some embodiments, module 64 limits the maximal number of flow-control traces per database entry, i.e., per IID. This limitation may be due, for example, to hardware constraints. In such embodiments, when a new trace is created for a given IID, module 64 may decide to replace an existing trace with the new trace in order not to exceed the maximal allowed number of traces.

It should be noted that, since the pipeline of processor 20 comprises multiple hardware threads 24, the pipeline may process multiple segments at least partly in parallel with one another.

In practice, there are various scenarios in which the control circuitry has no trace to follow in database 68. In other words, it may occur that the instructions flowing through the pipeline at a given time do not match any of the traces already present in database 68. Such a case may occur, for example, following branch or trace mis-prediction, following a backward branch, following a return from a function, following a jump caused by an indirect branch, a Branch with Link (BL) or indirect BL. Additionally or alternatively, the trace in question may have existed in the database but was deleted, e.g., due to limited memory space or other implementation constraint.

In some embodiments, when one of the above conditions (or other suitable condition) occurs, the control circuitry immediately begins monitoring the instructions, so as to add the appropriate trace to database 68. Note that these conditions are also specified as possible termination conditions for a trace. Thus, when a trace is terminated (and possibly added to the database), the control circuitry immediately starts monitoring the subsequent instructions.

When carrying out the process described above, at any given the control circuitry either traverses a flow-control trace that is already available in the invocation database, or monitors the instructions in order to have the database cover them. Over time, database 68 gradually grows towards covering the entire program code continuously, not only repetitive regions or other specific regions.

For the sake of clarity, Fig. 3 presents a flow in which the control circuitry starts to monitor instructions when it has no trace to follow. In other embodiments, the control circuitry continuously monitors the instructions even when the currently-followed trace is represented in database 68. In such a case, if mis-prediction occurs, monitoring is already in progress and continuity can be maintained. For example, a new trace can be reverted to. Certain aspects of monitoring during mis-prediction are addressed in U.S. Patent 9,135,015, whose disclosure is incorporated herein by reference.

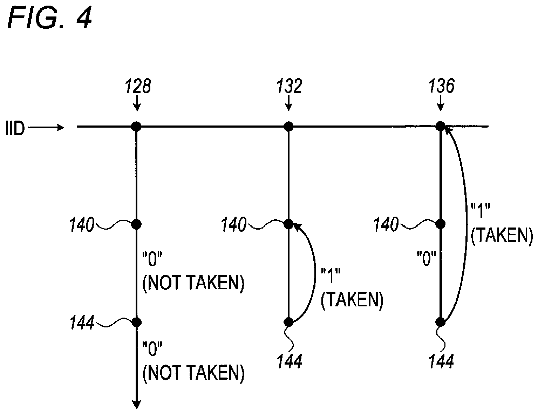

Fig. 4 is a diagram that schematically illustrates three traces 128, 132 and 136, which are specified in a given entry of invocation database 68, in accordance with an embodiment of the present invention. The downward direction in the figure corresponds to the order of instructions in the program code.

In the present example, all three traces begin at the same initial instruction (IID). The code region in question comprises two conditional branch instructions denoted 140 and 144, wherein instruction 144 is an indirect branch.

Trace 128 corresponds to a "not taken" branch decision at branch instruction 140, and another "not taken" branch decision at branch instruction 144. Trace 132 corresponds to a "not taken" branch decision at branch instruction 140, and then a "taken" branch decision at branch instruction 144. Trace 136 also corresponds to a "not taken" branch decision at branch instruction 140, and a "taken" branch decision at branch instruction 144. Traces 132 and 136 differ in the target address of indirect branch instruction 144.

It will be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A processor, comprising:
an instruction pipeline, configured to process instructions of program code; and
control circuitry, which is configured to monitor the processed instructions at run-time, to construct an invocation data structure comprising multiple entries, wherein each entry (i) specifies an initial instruction that is a target of a branch instruction, (ii) specifies a portion of the program code that follows one or more possible flow-control traces beginning from the initial instruction, and (iii) specifies, for each possible flow-control trace specified in the entry, a next entry that is to be processed following processing of that possible flow-control trace, and to configure the instruction pipeline to process segments of the program code, by continually traversing the entries of the invocation data structure.

2. The processor according to claim 1, wherein the control circuitry is configured to monitor the instructions continuously for all the instructions flowing through the pipeline, such that the invocation data structure progressively grows towards covering the entire program code.

3. The processor according to claim 1 or 2, wherein the control circuitry is configured to trigger monitoring of subsequent instructions in response to (i) every termination of a current monitoring process, (ii) every traversal of an entry that does not yet specify the next entry, and (iii) every traversal of an whose specified next entry does not exist in the invocation data structure.

4. The processor according to any of claims 1 to 3, wherein, in response to terminating monitoring of a flow-control trace, the control circuitry is configured to either (i) trigger traversal of a given entry of the invocation database corresponding to the instructions that are subsequent to the terminated flow-control trace, or (ii) trigger monitoring of the instructions that are subsequent to the terminated flow-control trace.

5. The processor according to any of claims 1 to 4, wherein the control circuitry is configured to define each of the possible flow-control traces to end in a respective branch instruction.

6. The processor according to any of claims 1 to 5, wherein the control circuitry is configured to construct the invocation data structure by:
while the processor processes the instructions on a given flow-control trace specified in a given entry, identifying that no next entry is specified for the given flow-control trace; and
monitoring a new portion of the program code that the processor processes subsequently to the given flow-control trace, and adding the new portion to the invocation database.

7. The processor according to any of claims 1 to 6, wherein the control circuitry is configured to decide to terminate monitoring of a new flow-control trace in response to meeting a predefined termination criterion, and then to add the new flow-control trace to the invocation database.

8. The processor according to claim 7, wherein the control circuitry is configured to meet the termination criterion in response to one or more of:
reaching an indirect branch instruction;
reaching a call to a function;
reaching an indirect call to a function;
reaching a return from a function;
reaching a backward branch instruction;
reaching a predefined number of backward branch instructions;
encountering branch mis-prediction;
reaching an instruction that already belongs to an existing entry in the invocation database;
detecting that the new portion exceeds a predefined number of loop iterations; and
detecting that the new portion exceeds a predefined size.

9. The processor according to claim 7 or 8, wherein the termination criterion is partly random.

10. The processor according to any of claims 7 to 9, wherein the control circuitry is configured to detect that the new flow-control trace contains, or is contained within, an existing flow-control trace that is already specified in the invocation database, and to retain only one of the existing flow-control trace and the new flow-control trace.

11. The processor according to any of claims 1 to 10, wherein each possible flow-control trace in the invocation data structure comprises one of:
a first type, which ends by returning to the initial instruction or to an instruction subsequent to a function call that branched to the initial instruction; and
a second type, which ends by branching out of the portion of the program code.

12. The processor according to any of claims 1 to 11, wherein the control circuitry is configured to configure the instruction pipeline to process the segments by invoking two or more of the segments at least partially in parallel.

13. The processor according to any of claims 1 to 12, wherein the control circuitry is configured to include in a given flow-control trace multiple iterations of a loop.

14. A method, comprising:
in a processor, which comprises a pipeline that processes instructions of program code, monitoring the processed instructions at run-time, and constructing an invocation data structure comprising multiple entries, wherein each entry:
(i) specifies an initial instruction that is a target of a branch instruction;
(ii) specifies a portion of the program code that follows one or more possible flow-control traces beginning from the initial instruction; and
(iii) specifies, for each possible flow-control trace specified in the entry, a next entry that is to be processed following processing of that possible flow-control trace; and
configuring the pipeline to process segments of the program code, by continually traversing the entries of the invocation data structure.

15. The method according to claim 14, wherein monitoring the instructions is performed continuously for all the instructions flowing through the pipeline, such that the invocation data structure progressively grows towards covering the entire program code.
